# EUROPEAN PATENT APPLICATION

(11) **EP 1 648 165 A1**
(43) Date of publication of application: **19.04.2006**
(21) Application number: 05022261.1
(22) Date of filing: 12.10.2005
(51) Int. Cl.: H04N 5/232, G03B 13/36, G02B 7/28

(54) **Auto focus system with automatic object tracking function**

(30) Priority: 14.10.2004 JP 2004300121
(71) Applicant: Fujinon Corporation, Saitama-shi, Saitama (JP)
(72) Inventor: Kanayama, Atsushi c/o Fujinon Corporation, Saitama-shi Saitama (JP)
(74) Representative: Klunker . Schmitt-Nilson . Hirsch

(57) **Abstract**

There is provided an auto focus system capable of, when manual operation is performed for moving the position of an AF area, which is an area to be targeted by auto focus (AF), while the AF area is automatically tracking a predetermined object, instantaneously changing the object to be targeted by AF by moving the AF area in accordance with the manual operation. An AF area controller (14) is provided with a track ball (40) for moving the position of the AF area by manual operation. A tracking device (16) gives the position of the AF area for causing the AF area to automatically track a predetermined target object, to the AF area controller (14). The AF area controller (14) causes the AF area to automatically track a predetermined target object by giving the position of the AF area given by the tracking device (16) to an AF processing section (22) of a lens device (12) for performing AF. If the track ball (40) is operated, the AF area controller (14) prioritizes the operation over the tracking device (16) and gives the position of the AF area based on the operation, to the AF processing section (22).

## Description

### BACKGROUND OF THE INVENTION

### Field of the Invention

The present invention relates to an auto focus system, in particular to an auto focus system capable of performing focusing while tracking a desired target object by moving the position (area) targeted by auto focus (AF) within the image-taking area of a camera.

### Description of the Related Art

In an image pickup system like a TV camera in which an image of an object is converted to electric signals (image signals) by an image sensor (such as a CCD), a contrast method is adopted in general as a method for auto focus (hereinafter referred to as AF). The contrast method is a method in which contrast of the object image is detected from the image signals acquired by the image sensor, and focusing is automatically performed to obtain the best focus condition by controlling the focus of the image taking lenses so that the contrast may be the highest.

In AF adopting the contrast method, in many cases, the entire object within the image-taking area of a camera is not targeted by AF, but only an object within a part of the image-taking area is targeted. In AF adopting the contrast method, image signals within the area targeted by AF are extracted from among image signals acquired from the entire image pickup area of the image sensor, and, by controlling the focus so that the contrast of the extracted image signals within the targeted area may be the highest, the target of AF is limited to the object within the partial area. In the present invention, the area of an object targeted by AF within the image-taking area of a camera, or an area on a screen of an object targeted by AF within the screen area of an image taken by a camera when the image is reproduced is referred to as an AF area, and the frame indicating the outline is referred to as an AF frame.

In the case where a single AF area is fixedly set at a predetermined position within the image-taking area, a rectangular AF area is set at the central part of the image-taking area as a standard. However, there is also known an auto focus system in which the position of the AF area can be changed by designation of an operator. When the position of the AF area is changed with the use of an operation device in a TV camera or the like, an operation device, such as a track ball and a joystick, capable of instructing vertical and horizontal movement of the AF area is used (see Japanese Patent Application Laid-Open No. 2002-365519, for example). There is also proposed a system in which the position of the AF area automatically moves following an object which is moving on a screen (automatic tracking) (see Japanese Patent Application Laid-Open No. 5-80248, for example).

### SUMMARY OF THE INVENTION

In actual image taking, there may be a case where only one object is not always targeted by AF, but the target of AF is to be instantaneously switched to another object by a cameraman's determination. In the case where the position of the AF area is moved by operating a manual operation member such as a track ball, the target of AF can be instantaneously changed by a cameraman's determination. However, in the case where the position of the AF area is automatically tracking a predetermined object, it is necessary, in a conventional system, to stop the automatic tracking operation and switch the operation to manual operation, which presents a problem that the target of AF cannot be instantaneously changed.

The present invention has been made in consideration of the above situation, and its object is to provide an auto focus system capable of instantaneously changing the object to be targeted by AF when the AF area is automatically tracking a predetermined object.

In order to achieve the above-described object, an auto focus system according to a first aspect of the present invention is an auto focus system having an auto focus device which automatically focuses an object within the range of an AF area, which is a part of , the image-taking area of a camera, and an AF area control device which controls automatic tracking for automatically moving the position of the AF area to follow movement of a target object to be focused by the auto focus device, the auto focus system comprising an AF area operation device which moves the position of the AF area in accordance with operation of a manual operation member, wherein, when the manual operation member of the AF area operation device is operated, the AF area control device moves the position of the AF area in accordance with the operation.

According to the first aspect, when the manual operation member of the AF area operation device is operated while the AF area is moving following a predetermined object under automatic tracking control, the AF area moves in accordance with the operation, and thereby, the target of AF can be instantaneously switched by the intention of an operator.

An auto focus system according to a second aspect of the present invention is the auto focus system of the first aspect, wherein the AF area control device suspends the control of automatic tracking until a predetermine operation is performed after the operation of the manual operation member of the AF area operation device ends. In the second aspect, when the manual operation member of the AF area operation device is once operated while the AF area is moving following a predetermined object under automatic tracking control, the control of automatic tracking is not automatically restarted but restarted by a predetermined operation.

An auto focus system according to a third aspect of the present invention is the auto focus system of the first aspect, wherein, when the operation of the manual operation member of the AF area operation device ends, the AF area control device resumes control of automatic tracking with an object within the range of the AF area moved by the operation as the target of the automatic tracking. In the third aspect, when the manual operation member of the AF area operation device is operated to move the AF area and the operation is stopped while the AF area is moving following a predetermined object under automatic tracking control, control of automatic tracking is restarted, and the AF area moves following an object in the AF area shown then. Accordingly, the target object to be automatically tracked can be instantaneously switched.

According to the auto focus system of the present invention, it is possible to instantaneously change the object to be targeted by AF even when the AF area is automatically tracked to follow a predetermined object.

### BRIEF DESCRIPTION OF THE DRAWINGS

Fig. 1 is a block diagram showing the entire configuration of an image pickup system to which an auto focus system according to the present invention is applied;
Fig. 2 shows an AF frame; and
Fig. 3 is a flowchart showing a procedure to be performed by an AF area controller which enables instantaneous change of a target object to be automatically tracked by operation of an operator.

### DETAILED DESCRIPTION OF THE PREFERRED EMBODIMENTS

An embodiment of an auto focus system according to the present invention will be described below in detail with reference to accompanying drawings.

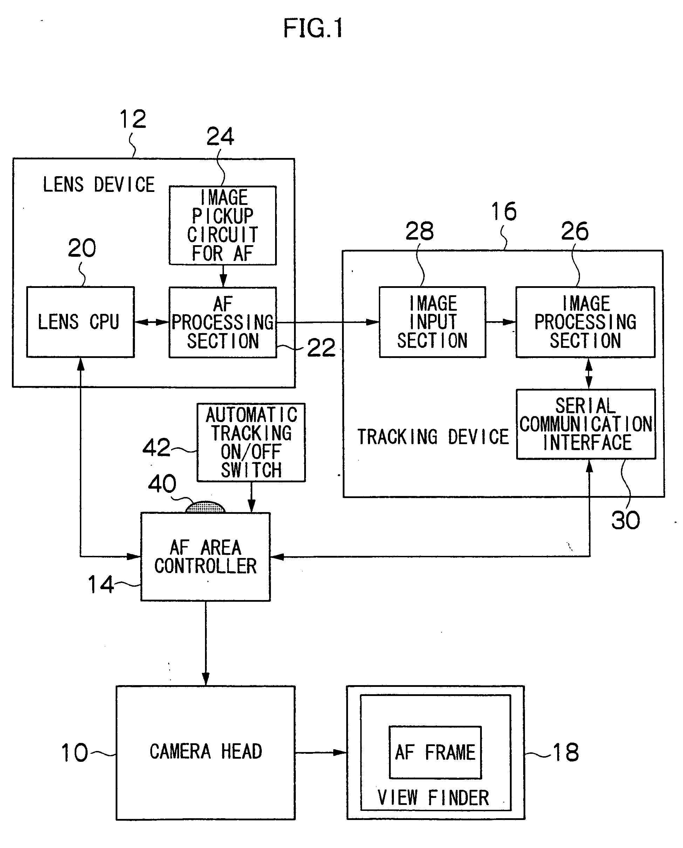

Fig. 1 is a block diagram showing the entire configuration of an image pickup system to which an auto focus system according to the present invention is applied. The image pickup system shown in Fig. 1 is, for example, an image pickup system used for image taking by a TV camera for broadcast. Fig. 1 shows a lens-exchangeable camera head 10, a lens device 12 provided with image taking lenses (an optical system) to be mounted on a lens mount of the camera head 10, an AF area controller 14, a tracking device 16, and the like.

The camera head 10 is mounted with an image sensor (for example, a CCD), a required signal processing circuit and the like. An image formed by the image taking lenses of the lens device 12 is photoelectrically converted by the image sensor, and after that, required signal processing is performed therefor by the signal processing circuit. An image signal in a predetermined format, which is generated by the signal processing circuit, is outputted from an image signal output terminal or the like of the camera head 10 to external equipment. The camera head 10 is also provided with a view finder (monitor) 18 for confirmation of composition. The image signal from the camera head 10 is given to the view finder 18, and a real-time image (picture) being taken by the camera head 10 is displayed on the screen of the view finder 18. On the screen of the view finder 18, there is also displayed information such as an AF frame indicating the range of the AF area targeted by auto focus (AF).

The lens device 12 is provided with image taking lenses (an optical system) not shown to be mounted on the lens mount of the camera head 10, and an image of an object is formed by the image taking lenses on the image-taking surface of the image sensor of the camera head 10. For the image taking lenses, there are provided movable sections for adjusting image-taking conditions, such as a focus lens group, a zoom lens group, and a diaphragm as components, and these movable sections are electrically driven by a motor (servo-mechanism) not shown. For example, the focus lens group and the zoom lens group move in the optical axis direction. Focus (object distance) adjustment is performed by movement of the focus lens group, and focal length (zoom magnification) adjustment is performed by movement of the zoom lens group. In a system related to auto focus like this embodiment, it is sufficient if at least the focus lens group is electrically driven, and other movable sections may be only manually driven. When a predetermined movable section is electrically driven in accordance with operation of an operator, the operation of the movable section is controlled based on a control signal outputted from an operation section (such as the operation section of a controller connected to the lens device 12) not shown, in accordance with operation of the operator, though the details thereof are omitted.

As shown in Fig. 1, the lens device 12 is mounted with a lens CPU 20 which performs overall control of the entire lens device 12, an AF processing section 22 which performs auto focus (AF) processing, an image pickup circuit for AF 24 and the like. The image pickup circuit for AF 24 is arranged in the lens device 12 to acquire an image signal for AF processing and is provided with an image sensor (such as a CCD), a processing circuit for outputting an output signal from the image sensor as an image signal in a predetermined format, and the like. The image sensor of the image pickup circuit for AF 24 is referred to as an image sensor for AF. The image signal outputted from the image pickup circuit for AF 24 is assumed to be a luminance signal.

On the image pickup surface of the image sensor for AF, there is formed an image from the object light branched from the object light which enters the image sensor of the camera head 10 by means of a half mirror or the like arranged on the optical path of the image taking lenses. The image-taking area and the object distance (the distance at which an object is focused) for the image pickup area of the image sensor for AF is configured to correspond to the image-taking area and the object distance for the image pickup area of the image sensor of the camera head 10, and the object image acquired by the image sensor for AF corresponds to the object image acquired by the image sensor of the camera head 10. Both image-taking areas do not have to completely correspond to each other. For example, the image-taking area of the image sensor for AF may be large enough to include the image-taking area of the image sensor of the camera head 10. The image sensor for AF may not be provided, and an image signal from the camera head 10 may be given to the AF processing section 22.

The AF processing section 22 acquires image signals from the image pickup circuit for AF 24, and calculates a focus evaluation value indicating height of contrast of an object image based on the image signals. For example, after high-frequency component signals among the image signals obtained from the image sensor for AF are extracted by means of a highpass filter, signals within the range corresponding to the AF area which is targeted by AF, among the high-frequency component signals, are integrated for each screen. The integrated value obtained for each screen as described above indicates height of contrast of the object image, and it is given to the lens CPU 20 as a focus evaluation value. The range of the AF area is specified by the lens CPU 20 as described later.

The lens CPU 20 acquires information indicating the range of the AF area (AF area information) from the AF area controller 14, and specifies the range of the AF area specified by the AF area information to the AF processing section 22, the details of which will be described later. Then, the focus evaluation value determined by the image (image signals) corresponding to the AF area is acquired from the AF processing section 22, and the focus lens group is controlled so that the acquired focus evaluation value may be the largest (maximum), that is, the contrast of the object image in the AF area may be the highest. For example, a mountain climbing method is generally known as a method for controlling a focus lens group based on a focus estimation value. In this method, the focus lens group is moved in the direction of increase in the focus estimation value, and when a point at which the focus estimation value starts to decrease is detected, the focus lens group is set at that point. Thereby, the object within the AF area is automatically focused.

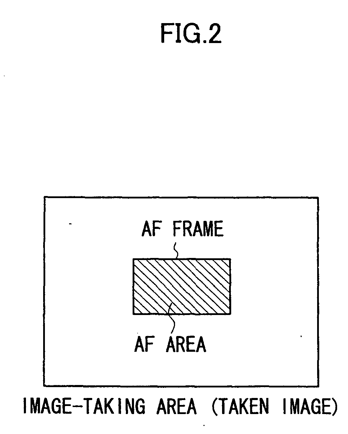

The AF area controller 14 is provided with a manual operation member which enables the operator to specify the range of the AF area, including the position, form, size and the like of the AF area. As shown in Fig. 2, the AF area indicates the image-taking area of the image sensor of the camera head 10 or an area on the screen showing a taken image, which is targeted by AF, and the frame indicating the outline of the area is the AF frame. When the manual operation member is operated by the operator, the AF area controller 14 sets or changes the range of the AF area (such as the position) in accordance with the operation.

In this embodiment, the form of the AF area is limited to a rectangle; the size of the AF area is assumed to be constant; and only a track ball 40 is provided as a manual operation member for changing only the position of the AF area. As the manual operation member for changing the position of the AF area, a direction indication member such as a joystick may be used in addition to a track ball. Change of the position of the AF area by the track ball 40 of the AF area controller 14 is performed by vertically or horizontally displacing the AF area in the direction and by the movement amount, the direction and the movement amount corresponding to the rotation direction and the rotation amount of the track ball 40 relative to the content of the setting for the AF area before operation. If a point which determines the position of the AF area (in this embodiment, the central position of the rectangular AF area) within the image-taking area (the screen showing a taken image) is referred to as an AF point, the position of the AF area is determined by setting the position of the AF point.

On the other hand, in a situation where the track ball 40 of the AF area controller 14 is not operated, and change of the position of the AF area has not been specified by the operator, the range (position) of the AF area is set or changed based on AF area information given by the tracking device 16. The tracking device 16 to be described later is a device for automatic tracking, which tracks a target object specified by the operator on the screen and causes the position of the AF area (AF point) to automatically move to follow movement of the target object. When operation for changing the AF area has not been performed by the operator, the position of the AF area is automatically changed, and when operation for changing the AF area has been performed by the operator, the operation is prioritized over the tracking device 16, and the position of the AF area is changed in accordance with the operation of the operator.

The AF area controller 14 is given an on/off state signal from an automatic tracking on/off switch 42. When the automatic tracking on/off switch 42 is off, AF area information from the tracking device 16 is ineffective, and the automatic tracking function is turned off. In this case, the position of the AF area is changed only by operation of the operator. The automatic tracking on/off switch 42 may be arranged in the AF area controller 14 or may be arranged in other devices.

The AF area controller 14 sends AF area information indicating the range of the AF area set or changed based on operation of the operator or AF area information from the tracking device 16, to the lens CPU 20 in accordance with a request from the lens CPU 20. Thereby, the range targeted by AF is set to the range of the AF area set or changed by the AF area controller 14.

The AF area controller 14 also sends the AF area information to the camera head 10, and causes the AF frame to be displayed at a corresponding position on the screen of the view finder 18. Thereby, the operator can recognize the position and the like of the AF area at that time by viewing the view finder 18.

The tracking device 16 is provided with an image processing section 26, an image input section 28, a serial communication interface 30 and the like. The image input section 28 acquires the image signals (luminance signals) obtained through the image pickup circuit for AF 24 via the AF processing section 22, and gives image data of a taken image obtained from the image signals, to the image processing section 26.

The image processing section 26 tracks a target object specified by the operator on the screen by the automatic tracking processing, based on the image data acquired from the image input section 28, and moves the position of the AF area (AF point) to follow the movement of the object. Then, the image processing section 26 sends AF area information indicating the position of the AF area to the AF area controller 14 via the serial communication interface 30, and specifies the position of the AF area when automatically changing the AF area. Information other than the AF area information is also exchanged between the AF area controller 14 and the image processing section 26 via the serial communication interface 30.

Designation of a target object to be tracked is performed, for example, by the operator operating the track ball 40 of the AF area controller 14 while viewing the image and the AF frame displayed on the screen of the view finder 18, including the whole or a part of the target to be automatically tracked (to be focused) within the AF frame, and stopping the operation in that condition. That is, the image within the AF area set when automatic tracking is started after operation of the track ball 40 by the AF area controller 14 is recognized as an image of a target object to be tracked. When operation of the track ball 40 of the AF area controller 14 stops, for example, an initialization instruction is given from the AF area controller 14 to the image processing section 26 via the serial communication interface 30. When the initialization instruction is given, the image processing section 26 simultaneously reads AF area information from the AF area controller 14, and recognizes the image (image data) within the range of the AF area acquired based on the AF area information, among image signals (an image corresponding to one screen within the entire image-taken area) given by the AF processing section 22 of the lens device 12 to the image input section 28, as the image of a target object to be tracked.

The tracking processing by the image processing section 26 is performed, for example, by a pattern matching method. In the case of the pattern matching method, the image processing section 26 recognizes the image within the range of the AF area, which has been acquired from the image input section 28 when an initialization instruction is given by the AF area controller 14, as the image of a target object to be tracked as described above, and sets or registers (stores) the image as a reference pattern. After that, the position of an image corresponding to the reference pattern image is detected through well-known pattern matching processing, from among taken images acquired from the AF processing section 22 of the lens device 12 via the image input section 28. Then, the position of the AF area (AF point) is moved based on the detected position of the reference pattern image in the taken image, and AF area information indicating the position of the AF area is sent to the AF area controller 14. Thereby, the position of the AF area for automatically tracking the target object is set by the AF area controller 14. The AF area controller 14 sends AF area information indicating the range of the AF area set or changed based on AF area information from the tracking device 16, to the lens CPU 20 in accordance with a request from the lens CPU 20. Thereby, the AF area moves following the object targeted by automatic tracking. The tracking processing by the image processing section 26 may be performed in methods other than the pattern matching method, and an interframe difference extraction method, for example, may be used in which movement of an image within the AF area is detected based on difference among frame images of image signals sequentially obtained.

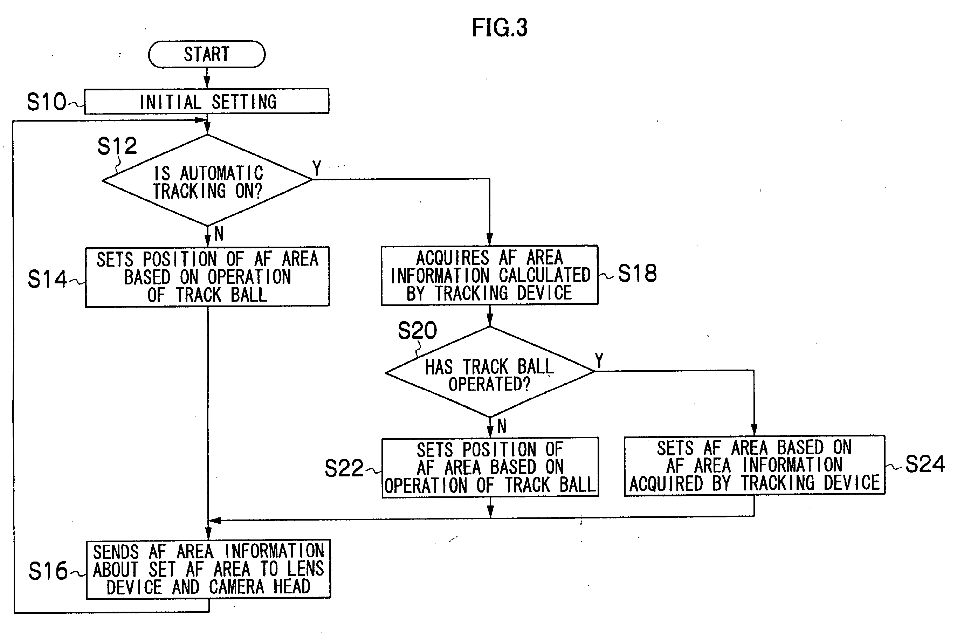

Next, description will be made using a flowchart of Fig. 3 on processing to be performed by the AF area controller 14 (the CPU mounted within the AF area controller 14) which enables an object targeted by AF (target object to be automatically tracked) to be instantaneously changed by operation of the operator. After making required setting (step S10), the AF area controller 14 determines whether the automatic tracking on/off switch 42 is on or not. If NO (off) is determined, then the position of the AF area is determined based on operation of the track ball 40, and the range of the AF area is set in consideration of other elements (size and form) (step S16). Then, AF area information indicating the set range of the AF area is sent to the lens device 12 and the camera head 10 (step S16). That is, if the automatic tracking on/off switch 42 is off, the position of the AF area is changed only by manual operation of the AF area controller 14.

On the other hand, if YES is determined at step S12, that is, if it is determined that the automatic tracking on/off switch 42 is on, then AF area information indicating the position of the AF area determined by automatic tracking by the tracking device 16 is acquired (step S18). Subsequently, it is determined whether or not operation of the track ball 40 has been performed (step S20). If YES is determined, then the position of the AF area is determined based on the operation of the track ball 40, and the range of the AF area is set in consideration of other elements (step S22). Then, AF area information indicating the set range of the AF area is sent to the lens device 12 and the camera head 10 (step S16).

If NO is determined at step S20, that is, if it is determined that operation of the track ball 40 has not been performed, then the position of the AF area is determined based on the AF area information acquired from the tracking device 16 at step S18, and the range of the AF area is set in consideration of other elements (step S24). Then, AF area information indicating the set range of the AF area is sent to the lens device 12 and the camera head 10 (step S16).

When the processing at step S16 ends, the procedure returns to step S12, and the processing from step S12 is repeated.

According to this processing, if the track ball 40 is operated while the AF area is moving following movement of a particular target object by the tracking processing of the tracking device 16, the AF area moves accordingly. If the position of the AF area is set for another target object, then, the target to be automatically tracked is switched to that other target object. Accordingly, the target to be automatically tracked can be instantaneously switched by the intention of the operator.

In the embodiment described above, when the position of the AF area is moved by operating the track ball 40 while a particular target object is automatically tracked, a target object within the range of the AF area after that operation is automatically set as a target object to be automatically tracked, and automatic tracking is automatically restarted for the target object. However, it is possible to prevent automatic tracking from being automatically restarted after the position of the AF area is moved by operating the track ball 40. For example, automatic tracking may be restarted by turning on a predetermined start switch. Setting of a target object to be automatically tracked may be performed not automatically but by specifying the target object by a predetermined operation, and automatic tracking may be stopped at least until the target object is specified after the position of the AF area is moved by operating the track ball 40.

In the embodiment described above, the lens device 12, the AF area controller 14 and the tracking device 16 are shown as separate devices. However, any two or all of them may be an integrated device.

In the embodiment described above, an image signal is acquired for AF by an image sensor dedicated for AF, which is different from the image sensor of the camera head 10. However, an image signal acquired by the image sensor of the camera head 10 may be used for AF.

## Claims

1. An auto focus system having an auto focus device which automatically focuses an object within the range of an AF area, which is a part of the image-taking area of a camera, and an AF area control device (16) which controls automatic tracking for automatically moving the position of the AF area to follow movement of a target object to be focused by the auto focus device, the auto focus system comprising:
an AF area operation device (14) which moves the position of the AF area in accordance with operation of a manual operation member (40), wherein
when the manual operation member (40) of the AF area operation device (14) is operated, the AF area control device (16) moves the position of the AF area in accordance with the operation.

2. The auto focus system according to claim 1, wherein the AF area control device (16) suspends the control of automatic tracking until a predetermine operation is performed after the operation of the manual operation member (40) of the AF area operation device (14) ends.

3. The auto focus system according to claim 1, wherein
when the operation of the manual operation member (40) of the AF area operation device (14) ends, the AF area control device (16) resumes control of automatic tracking with an object within the range of the AF area moved by the operation as the target of the automatic tracking.
